# EUROPÄISCHE PATENTSCHRIFT

(11) **EP 2 463 146 B1**
(45) Veröffentlichungstag und Bekanntmachung des Hinweises auf die Patenterteilung: **29.10.2014**
(21) Anmeldenummer: 11192650.7
(22) Anmeldetag: 08.12.2011
(51) Int. Cl.: B60N 2/50, B60N 2/52

(54) **Fahrzeugschwingungsvorrichtung für Fahrzeugsitze oder Fahrzeugkabinen**
Vehicle vibration device for vehicle seats or vehicle cabins
Dispositif d'oscillation de véhicule pour sièges de véhicule ou cabines de véhicule

(30) Priorität: 08.12.2010 DE 102010053752
(43) Veröffentlichungstag der Anmeldung: 13.06.2012
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- WO-A1-2007/058572
- DE-A1- 3 208 680
- US-A- 5 437 494
- US-A- 5 449 218

## Beschreibung

Die Erfindung betrifft eine Schwingungsvorrichtung für Fahrzeuge, insbesondere eine Fahrzeugschwingungsvorrichtung für einen Fahrzeugsitz oder eine Fahrzeugkabine mit einem Unterteil und einem gegenüber dem Unterteil mittels mindestens einer Dämpfereinrichtung federnd gelagertem Oberteil gemäß dem Oberbegriff des Patentanspruches 1.

Fahrzeugschwingungsvorrichtungen, insbesondere für Fahrzeugsitze sind derart ausgebildet, dass sie eine schwingende und federnde Lagerung zwischen einem Oberteil und einem Unterteil, in diesem Fall zwischen einem Fahrzeugsitzteil und einem Unterteil eines Fahrzeugsitzunterbaus, darstellen. Beispielsweise kann ein Fahrzeugsitz mit einem Sitzteil gegenüber einem Unterteil, welches an einem Fahrzeugkabinenboden oder einer Karosserie des Fahrzeuges befestigt ist, mittels Scherenarme verbunden sein, wobei zwischen dem Oberteil und dem Unterteil zusätzlich Federungseinrichtungen und/oder Dämpfereinrichtungen angeordnet sind, um eine in vertikaler Richtung ausgerichtete Schwingung, die von außen in das System des Fahrzeugsitzes eingeleitet wird, federnd abzufangen.

Ebenso gibt es horizontale Schwingungsvorrichtungen, die dazu dienen, Schwingungen, die in horizontaler Richtung in das System des Fahrzeugsitzes eingeleitet werden, abzufedern bzw. abzudämpfen. Hierfür ist das Oberteil des Fahrzeugsitzes gegenüber dem Unterteil des Fahrzeugsitzes in horizontaler Richtung federnd gelagert und kann in horizontaler bzw. transversaler Richtung eingeleitete Schwingungen federnd abfangen.

Horizontale Schwingungseinleitungen in das System des gefederten Fahrzeugsitzes oder einer gefederten Fahrzeugkabine treten häufig dann auf, wenn ein Nutzfahrzeug, in dem dieser Fahrzeugsitz bzw. die Fahrzeugkabine angeordnet ist, mit seinen Vorderrädern in eine Mulde oder über eine Kuppe fährt und hierdurch der Fahrzeugsitz bzw. die Fahrzeugkabine kurzzeitig in Fahrzeuglängsrichtung eine Abbremsung oder eine Beschleunigung gegenüber dem restlichen Fahrzeug erfährt. Dies liegt unter anderem daran, dass das Fahrergewicht mit einer gewissen Trägheit relativ zu der Bewegung des Fahrzeugs zeitverzögert oder beschleunigt verschoben wird. Eine reine horizontale Anregung tritt bevorzugt auf, wenn man beispielsweise von einem steifen Unterbau (ungefedertes Fahrzeug) und einem horizontalen Stoß, beispielsweise des Anhängers, z. B. durch die Auflaufbremse, ausgeht. Das Überfahren von Mulden und Steinen mit dem Vorderrad führt bevorzugt zumindest teilweise zu einer Rotationsbewegung um den Aufstandspunkt des Hinterrades mit einem Abstand r (entspricht dem Abstand von dem Aufstandspunkt zur Sitzfläche). Rollt dann das Hinterrad über die Unebenheit, führt dies ebenfalls zu einer rotatorischen Bewegung um die Aufstandsfläche bzw. den Aufstandspunkt des Vorderrades. Diesen Stoß fängt bevorzugt überwiegend die vertikale Federung ab, da diese nahezu über dem Anregungspunkt bzw. der Aufstandsfläche des Hinterrads ist.

Häufig ergibt sich bei derartigen horizontal ausgerichteten Fahrzeugschwingungsvorrichtungen das Problem, dass die in das System eines Fahrzeugsitzes oder einer Fahrzeugkabine eingeleiteten Schwingungen lediglich in paralleler Richtung zu dem Fahrzeugboden, auf dem der Fahrzeugsitz angeordnet ist, federnd abgefangen werden können. Allerdings beschreibt dies ein Fahrzeug, welches beispielsweise mit seiner Vorderachse auf eine Kuppe bzw. eine erhöhte Fahrbahnunebenheit, insbesondere einen oder mehrere Steine, Äste oder ähnliches, oder in eine Mulde fährt, das nicht ausschließlich eine kurzzeitige Veränderung seiner Geschwindigkeit nur in horizontaler Richtung erfährt. Vielmehr wird eine Art Kippbewegung des gesamten Fahrzeuges, wenn auch mit einer geringen Auslenkung verbunden, um eine in Fahrzeugbreitenrichtung sich erstreckende Achse stattfinden.

Bisherige Fahrzeugsitze haben bei einer derartigen Kippbewegung oder auch Nickbewegung die Möglichkeit, die eingeleiteten Schwingungen wie folgt federnd abzufangen:
Für den ersten Freiheitsgrad von Schwingungen in vertikaler Richtung (Z-Achse) ist eine, bezogen auf den Fahrzeugboden, sich vertikal erstreckende Fahrzeugschwingungsvorrichtung zwischen einem Fahrzeugsitzoberteil und einem Fahrzeugsitzunterteil vorhanden. Zusätzlich können Dämpfungseinrichtungen in vertikaler Richtung eingerichtet sein. Für die, bezogen auf den Fahrzeugboden, in längshorizontaler Richtung eingeleiteten Schwingungen sind gemäß dem zweiten Freiheitsgrad (X-Achse) in Fahrzeuglängsachsenrichtung die sogenannten horizontalen Fahrzeugschwingungsvorrichtungen vorhanden. Für den dritten Freiheitsgrad (Y-Achse) können in Fahrzeugbreitenrichtung in horizontaler Richtung wirkende Fahrzeugschwingungsvorrichtungen vorhanden sein.

Somit bestehen bisher drei getrennt voneinander zu betrachtende Fahrzeugschwingungsvorrichtungen für insgesamt drei Freiheitsgrade entlang der X-Achse, Y-Achse und Z-Achse eines Fahrzeuges. Die für eine Schwingungsdämpfung von eingeleiteten Schwingungen erforderlichen Federwege werden immer in Richtung der Fahrzeugebenenachsen geführt. Herkömmlicherweise sind derartige Federwege in vertikaler Richtung auf ca. 100 mm in ihrer Ausdehnung begrenzt. Bei längs- und seitenhorizontal wirkenden Federwegen hängt dies von der Konstruktion und sicherheitstechnischen Erfordernissen der Umgebung ab, wie es durch die Erreichbarkeit von Bedienelementen und Scherenelementenstellungen vorgegeben sein kann. Derartige horizontal wirkende Federwege sind üblicherweise mit +/- 25 mm sowohl in Richtung der X-Achse als auch in Richtung der Y-Achse beschränkt. Eine Kipp- oder Nickbewegung des Fahrzeuges kann durch derartige getrennt voneinander angeordnete Fahrzeugschwingungsvorrichtungen aufgrund der festgelegten Freiheitsgrade der einzelnen Fahrzeugschwingungsvorrichtungen in ihren Federwegen nicht oder nur unzureichend ausgeglichen werden.

Die Druckschrift WO 2007/058572 A1 zeigt eine Fahrzeugschwingungsvorrichtung, bei der das Fahrzeugoberteil mittels Anordnungen aus jeweils zwei starr und einem schwenkbar angeordneten Hebelarmen hängend gegenüber dem Fahrzeugunterteil gelagert ist. Eine Begrenzung der Schwenkbewegung ist dann gegeben, wenn die Hebelarme miteinander kollidieren, was aber nachteilig ist, da Materialermüdung auf Dauer nicht ausgeschlossen werden kann. Außer dass das eine Ende der schwenkbaren Hebelarme sich jeweils auf einem definierten Kreisbogen bewegt, ist keine weitere Führung oder Steuerung der Schwenkbewegungen möglich, da keine geeigneten Vorrichtungen vorgesehen sind.

In der Druckschrift DE 32 08 680 A1 ist eine Anordnung für Federaufhängungssysteme gezeigt, bei der eine vertikal angeordnete hydropneumatische Feder an ihrem oberen Ende mittels eines Drehgelenks mit einer Fahrzeugkabine verbunden ist. Gleichzeitig ist zwischen einem Fahrzeugkäfig und der Feder eine elastomere Buchse angeordnet, um die Schwingung der Kabine gegenüber dem Käfig abzufedern. Jedoch können mittels der gezeigten Anordnung keine großen Schwingungen aufgefangen werden. Ferner ist keine präzise Steuerung der Schwingungen möglich.

Die Druckschrift US 5,437,494 zeigt einen Fahrzeugsitz, bei dem dessen Schwingung gegenüber einem Fahrzeugsitzunterteil mittels Anordnungen aus Kurvenbahnen und darin verlaufenden Bolzen oder Hebelmechaniken steuerbar ist. Allerdings ist die Anordnung vornehmlich für die Aufnahme horizontal eingeleiteter Schwingungen geeignet.

Demzufolge liegt der vorliegenden Erfindung die Aufgabe zugrunde, eine Fahrzeugschwingungsvorrichtung für einen Fahrzeugsitz oder eine Fahrzeugkabine zur Verfügung zu stellen, welche einen höheren Sitzkomfort der das fahrzeugfahrenden Person bei Durchfahren einer Mulde oder einer Kuppe zur Verfügung stellt. Ferner soll die erfindungsgemäße Fahrzeugschwingungsvorrichtung eine geführte und begrenzbare bzw. steuerbare Schwingung des Fahrzeugsitzes ermöglichen.

Diese Aufgabe wird gemäß den Merkmalen des Patentanspruches 1 gelöst.

Ein wesentlicher Punkt der Erfindung liegt darin, dass bei einer Fahrzeugschwingungsvorrichtung für einen Fahrzeugsitz oder eine Fahrzeugkabine mit einem Unterteil und einem gegenüber dem Unterteil mittels mindestens einer Dämpfereinrichtung federnd gelagerten Oberteil das Oberteil an dem Unterteil hängend gelagert ist, sodass das Oberteil bei Auftreten von Schwingungen zwischen dem Oberteil und dem Unterteil um eine fiktive oder reelle, unterhalb des Oberteils angeordnete, sich in Fahrzeugbreitenrichtung oder Fahrzeuglängsrichtung erstreckende Achse schwenkbar ist, wobei ein mittels einer zweiten Schwenkachse am Oberteil angebrachtes zweites Ende jeweils mindestens eines Hebelarms einer ersten und einer zweiten Schwenklagerung, mittels der das Unterteil und das Oberteil miteinander verbunden sind, unterhalb eines mittels einer ersten Schwenkachse am Unterteil angebrachten ersten Endes liegt und die Hebelarme nach unten betrachtet zueinander hingewandt ausgerichtet sind, und wobei die zweite Schwenkachse der zweiten Schwenklagerung innerhalb einer am Unterteil angebrachten Kurvenbahn verschiebbar ist.

Durch die hängende Lagerung des Oberteils an dem Unterteil und die mögliche Schwenkbewegung um eine fiktive oder reelle sich in Fahrzeugbreitenrichtung oder Fahrzeuglängsrichtung erstreckende Achse, welche unterhalb des Oberteils angeordnet ist, kann vorteilhaft erreicht werden, dass bei einem Durchfahren eines Schlaglochs oder bei einem Überfahren einer Kuppe die durch das Fahrzeug durchgeführte Nick- oder Kippbewegung bzw. eine Art Rollbewegung von der Fahrzeugschwingungsvorrichtung ausgeglichen werden kann. Denn sofern das Fahrzeug beispielsweise über eine Kuppe fährt und somit mit den Vorderrädern nach oben ausgelenkt wird, wobei zugleich eine kurzzeitige Abbremsung in Fahrzeuglängsrichtung, also in horizontaler Richtung, stattfindet, findet eine Art Kipp- oder Nickbewegung des Fahrzeuges statt, die durch die Schwenkbewegung des Oberteils und Unterteils des Fahrzeugsitzes oder einer Fahrzeugkabine entgegengesetzt ausgeglichen werden könnte. Dies kann mittels der Dämpfungseinrichtung und ggf. einer weiteren Federungseinrichtung dämpfend und federnd unterstützt werden, sodass die eingeleitete kippartige Bewegung schwingend abgedämpft werden kann.

Beim Überfahren einer Erhöhung oder eines Steines wird das Vorderrad bzw. das Vorderteil des Fahrzeuges somit bevorzugt nach oben gestoßen, woraus eine Drehbewegung des Fahrzeuges um die Aufstandsfläche des Hinterreifens resultieren kann. Die Massenträgheit des Fahrers möchte aber den Fahrzeugsitz und den Fahrer selber translatorisch weiterbewegen. Hier ist ein rotatorischer Freiheitsgrad hilfreich, sodass dem Fahrer die Rotation des Fahrzeuges durch das Steigen des Fahrzeugvorderteils nicht aufgezwungen wird.

Durch die Festlegung einer fiktiven oder reellen Achse, um die diese Schwenkbewegung stattfindet und die zugleich diejenige gedachte Achse sein kann, um welche sich der Fahr zeugrumpf bei Überfahren der Kuppe oder Durchfahren der Mulde rotatorisch bewegt, können sogenannte rotative Freiheitsgrade geschaffen werden. Eine mechanische Kinematik zur Durchführung einer Schwenkbewegung gemäß diesen rotativen Freiheitsgraden kann sowohl fahrzeugseitig, also beispielsweise in dem Fahrzeugboden oder einem Fahrzeugkabinenboden, als auch sitzseitig, also direkt in dem Fahrzeugsitz, untergebracht werden, sodass eine reelle Achse oder auch eine fiktive Achse, um welche die Schwenkbewegung durchgeführt wird, in diesen Teilen angeordnet ist.

Im vorliegenden Fall ist durch eine derartige hängende Aufhängung des Oberteils gegenüber dem Unterteil, also eines Fahrzeugsitzoberteils gegenüber einem Fahrzeugkarosserieteil oder einem Fahrzeugkarosserierahmen oder einem Fahrzeugsitzunterteil, welches mit einem Fahrzeugkabinenteil verbunden ist, oder bei Anwendung auf Fahrzeugkabinen gegenüber einem Fahrzeugrahmenteil, das Oberteil und das Unterteil erfindungsgemäß mittels mindestens einer ersten und einer zweiten Schwenklagerung miteinander verbunden. Hierbei umfasst die erste Schwenklagerung ebenso wie die zweite Schwenklagerung erfindungsgemäß jeweils mindestens einen Hebelarm, dessen erstes Ende mittels einer ersten Schwenkachse am Unterteil und dessen zweites Ende mittels einer zweiten Schwenkachse am Oberteil schwenkbar angebracht ist, wobei das zweite Ende unterhalb des ersten Endes liegt. Dies bedeutet, dass das Oberteil nach unten oder schräg nach unten weisenden Hebelarmen hängend an dem Unterteil aufgehängt ist, welches sich beispielsweise seitlich links und rechtsseitig von dem Oberteil nach oben erstreckt oder seitlich im vorderen und hinteren Bereich des Oberteils sich nach oben erstreckt. Eine derartige Aufhängung kann - sofern sie mit mindestens zwei Schwenklagern erzeugt worden ist - eine schwingende Bewegung im Sinne einer Rotationsbewegung gegenüber der fiktiven bzw. reellen Achse durchführen, wobei erfindungsgemäß die zweite Schwenkachse der zweiten Schwenklagerung innerhalb einer am Unterteil angebrachten Kurvenbahn verschiebbar ist.

Diese Kurvenbahn ermöglicht durch ihre Bogenform die geführte Bewegung des Oberteils, also des Fahrzeugsitzoberteiles bzw. der Fahrzeugkabine, auf einer Rotationsbewegungsbahn, wobei die Bogenverlaufsform dieser Kurvenbahn die Lage des fiktiven oder reellen Drehpunktes, um den sich der Fahrzeugsitz verschwenken soll, bestimmt. So kann z. B. durch das Ende dieser bogenförmigen Kurvenbahn die maximal mögliche Schwenkbewegung des Fahrzeugsitzes gegenüber dem restlichen Fahrzeug bei Durchfahren einer Mulde oder bei Überfahren einer Kuppe bestimmen. Ebenso kann durch die bogenförmige Form der Kurvenbahn bestimmt werden, wie leicht oder schwer sich das Oberteil gegenüber einer erzeugten Schwenkbewegung des restlichen Fahrzeugs aufgrund des Durchfahrens durch eine Mulde oder des Überfahrens über eine Kuppe in der Rotationsbewegung bewegen lässt. Das heißt, der Fahrzeugsitz kann durchaus aufgrund der Bogenform dieser Kurvenbahn leichte Schwenkbewegungen des Fahrzeuges nicht mit einer gegengesteuerten Rotationsbewegung ausgleichen, jedoch bei einer starken Auslenkung bzw. Schwenkbewegung des Fahrzeugs oder Nickbewegung des Fahrzeuges, bei der die zweite Schwenklagerung mehr in die Randbereiche der Kurvenbahn gelangt, welche in diesem Bereich eine andere Bogenform aufweist, bereitwilliger eine entgegengesetzte Rotationsbewegung zum Ausgleich für die Schwenkbewegung des restlichen Fahrzeugs zulassen.

In seiner bevorzugten Ausführungsform ist jeweils eine erste Schwenklagerung an im Fahrzeug vorderen Bereich des Oberteiles sich nach oben erstreckenden Seitenwandungen des Unterteils einerseits und an zwischen den fahrzeuglinks- und fahrzeugrechtsseitigen Seitenwandungen angeordneten Seitenbauteilen des Oberteils andererseits angeordnet.

Jeweils eine zweite Schwenklagerung ist an im fahrzeughinteren Bereich des Oberteils sich nach oben erstreckenden Seitenwandungen des Unterteils einerseits und an zwischen den fahrzeuglinks- und fahrzeugrechtsseitigen Seitenwandungen angeordneten Seitenbauteilen des Oberteils angeordnet. Somit sind links- und rechtsseitig von einem Fahrzeugsitz oder einer Fahrzeugkabine zwei vordere erste Schwenklagerungen und zwei hintere zweite Schwenklagerungen angeordnet. Der Fahrzeugsitz oder die Fahrzeugkabine weisen somit insgesamt vier Schwenklagerungen auf, die eine wippende Aufhängung des Fahrzeugsitzoberteils gegenüber dem Fahrzeugsitzunterteil oder der Fahrzeugkabine gegenüber dem restlichen Fahrzeug zur Herbeiführung einer Rotationsbewegung des Oberteils ermöglichen.

Gemäß einer bevorzugten Ausführungsform, die in Kombination mit der soeben beschriebenen hängenden Lagerung zum Durchführen einer Rotationsbewegung in Längsrichtung des Fahrzeuges und des Fahrzeugsitzes bzw. der Fahrzeugkabine gesehen werden kann, sind die ersten und zweiten Schwenklagerungen an fahrzeugvorderseitigen und fahrzeugrückseitigen Vorderseite- und Rückseite-Wandungen des Unterteils und an vorderseitigen und rückseitigen Bauteilen des Oberteils zur Durchführung einer Schwenkbewegung in Fahrzeugbreitenrichtung angeordnet. Hierdurch kann eine Rotationsbewegung zum Ausgleich von Kippbewegungen in Fahrzeugbreitenrichtung auch in Breitenrichtung des Fahrzeugsitzes und/oder der Fahrzeugkabine durchgeführt werden. Somit ist sowohl in Fahrzeugbreitenrichtung als auch in Fahrzeuglängsrichtung eine ausgleichende Rotationsbewegung des Fahrzeugsitzes und/oder der Fahrzeugkabine möglich.

Die Schwenkbewegung des schwenkbaren Oberteils kann mittels der Dämpfereinrichtung mit einer der Schwenkbewegung entgegenwirkenden Dämpfungskraft zur Schwingungsdämpfung beaufschlagbar sein, wobei die Dämpfereinrichtung mit mindestens einem der Hebelarme einerseits und dem Unterteil andererseits verbunden ist. Zusätzlich kann eine derartige Dämpfereinrichtung mit einer Bewegungseinrichtung gekoppelt sein, die die entgegengesetzte Rotationsbewegung des Fahrzeugsitzes bzw. der Fahrzeugkabine gegenüber der Rotationsbewegung des Fahrzeuges fördert.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung einen Ausschnitt eines Nutzfahrzeuges mit einem Fahrzeugsitz gemäß einer ersten Ausführungsform der Erfindung;
- Fig. 2a, 2b und 2c: in einer schematischen Darstellung einen Fahrzeugsitz gemäß der ersten Ausführungsform der Erfindung in verschiedenen Schwenkstellungen;
- Fig. 3a und 3b: den Fahrzeugsitz gemäß der ersten Ausführungsform der Erfindung in schematischer Darstellung mit technischen Details, auch in einer Ausschnittsdarstellung;
- Fig. 4: in einer perspektivischen schematischen Darstellung den Fahrzeugsitz gemäß einer weiteren zweiten Ausführungsform der Erfindung;
- Fig. 5a, 5b und 5c: den Fahrzeugsitz gemäß Fig. 4 in einer Seitendarstellung in verschiedenen Schwenkpositionen;
- Fig. 6: den Fahrzeugsitz in einer teilweise wiedergegebenen Querschnittsdarstellung gemäß der zweiten Ausführungsform der Erfindung;
- Fig. 7a und 7b: den Fahrzeugsitz gemäß der zweiten Ausführungsform der Erfindung in einer schematischen hinteren Ansicht, und
- Fig. 8a, 8b und 8c: den Fahrzeugsitz gemäß der zweiten Ausführungsform der Erfindung in schematischer Ansicht von hinten in verschiedenen Schwenkpositionen, die sich in Fahrzeugbreitenrichtung richten.

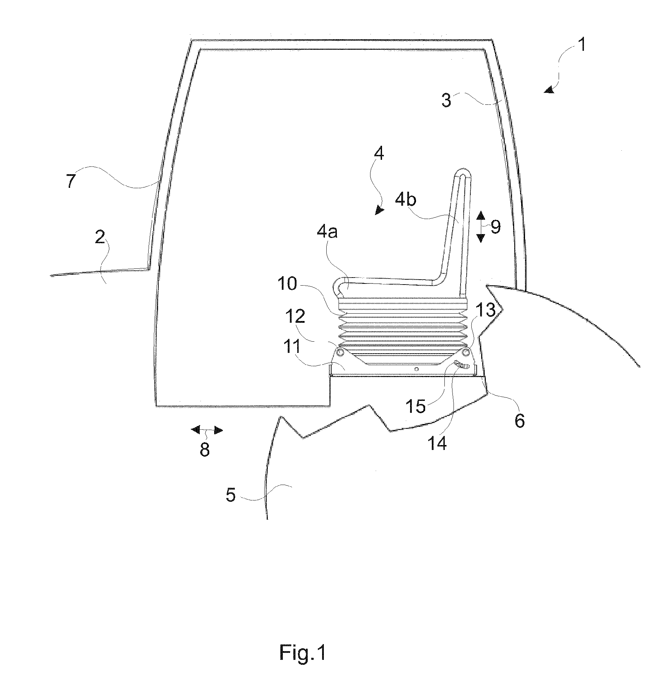

In Fig. 1 wird in einer schematischen Darstellung ein Ausschnitt eines Nutzfahrzeuges mit einem Fahrzeugsitz gemäß der ersten Ausführungsform der Erfindung gezeigt. Der Ausschnitt des Nutzfahrzeuges 1 zeigt eine angedeutete Karosserie 2 sowie eine Fahrzeugkabine 3, in der der erfindungsgemäße Fahrzeugsitz 4 gemäß seiner ersten Ausführungsform der Erfindung angeordnet ist.

Der Fahrzeugsitz 4 ist auf einem Anteil 6 der Fahrzeugkarosserie angeordnet.

Das Fahrzeug weist ein Hinterrad 5 sowie eine Windschutzscheibe 7 auf.

Bisher war ein derartiger Fahrzeugsitz herkömmlicherweise ausschließlich mit einer herkömmlichen Längshorizontalfederung als Fahrzeugschwingungsvorrichtung zusätzlich zu der Vertikalfederung ausgestattet. Dies lässt lediglich einen Freiheitsgrad in X-Richtung, also in Fahrzeuglängsrichtung, zum Verschieben und federnden Abklingen der horizontal eingeleiteten Schwingung zu. Eine derartige herkömmliche Längshorizontalfederung ermöglichte üblicherweise ein Verschieben des Fahrzeugsitzes nach hinten oder nach vorne bei entsprechender kurzweiliger Stockung oder starkem Antriebsverhalten des Fahrzeuges. Dies wird durch den Doppelpfeil 8 in Fahrzeuglängsrichtung wiedergegeben.

Eine Höhenverstellung des Fahrzeugsitzes sowie eine ausschließlich in vertikaler Richtung ausgerichtete Schwingungsbewegung werden durch den Doppelpfeil gemäß Bezugszeichen 9 wiedergegeben.

Der erfindungsgemäße Fahrzeugsitz 4 weist eine Sitzfläche 4a und eine Rückenlehne 4b auf, die zusammen ein Fahrzeugsitzoberteil bilden und mittels zweier hier nicht näher dargestellter Scherenarme, die sich innerhalb eines Faltenbalges 10 befinden, mit einem Fahrzeugsitzunterteil 11 schwingend befestigt sind.

Das Fahrzeugsitzunterteil 11 weist Schwenklagerungen mit ersten Schwenkachsen 12, 13 auf, an denen das Fahrzeugsitzoberteil 4a, 4b mittels zweiter Schwenkachsen 14 und einer weiteren der ersten Schwenkachse 12 zugeordneten zweiten Schwenkachse, die hier nicht dargestellt ist, wippend und schwenkbar aufgehängt ist.

Die zweite Schwenkachse 14 bewegt sich innerhalb einer bogenförmigen Kurvenbahn 15, welche die Schwenkbewegung bzw. die Rotationsbewegung des Fahrzeugsitzoberteiles gegenüber dem Fahrzeugsitzunterteil durch ihren Verlauf vorgibt.

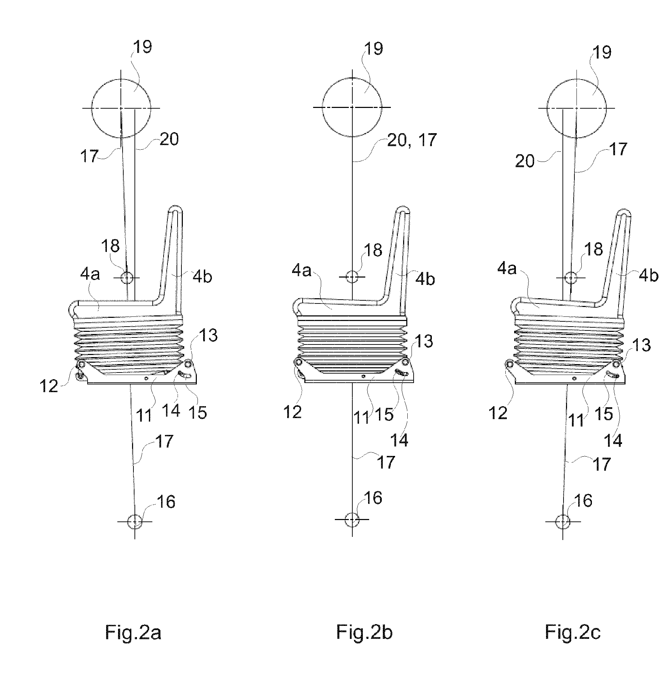

In Fig. 2a, 2b und 2c sind in einer schematischen Seitendarstellung verschiedene Schwenkpositionen des erfindungsgemäßen Fahrzeugsitzes gemäß der ersten Ausführungsform wiedergegeben. In Fig. 2b ist der Fahrzeugsitz 4 mit seiner Sitzoberfläche 4a und der Rückenlehne 4b in unverschwenkter Stellung, also weder nach vorne noch nach hinten gekippt, dargestellt.

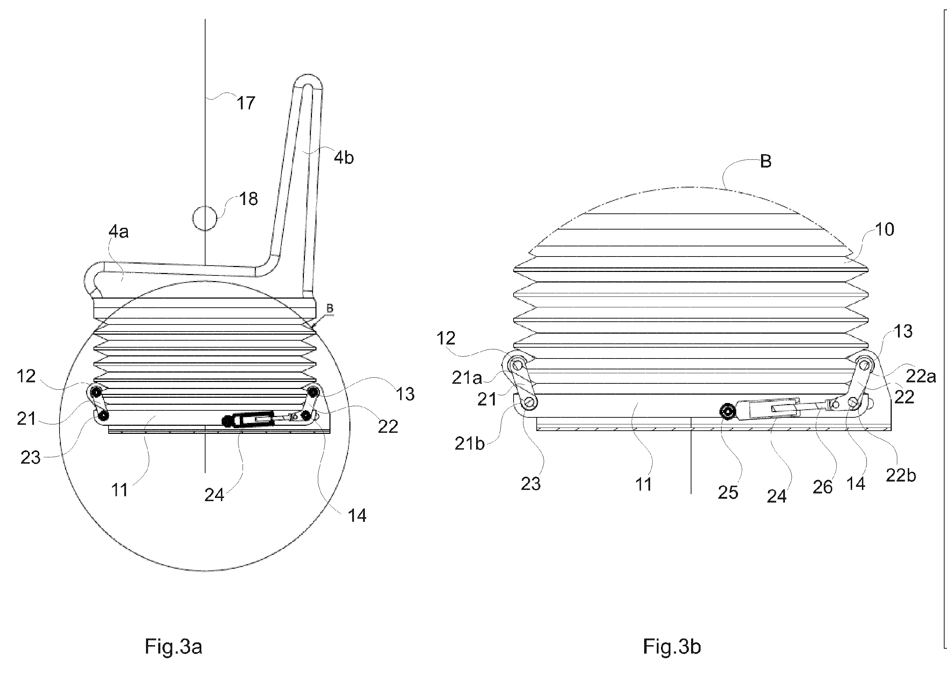

Der Fahrzeugsitz kann aufgrund der hängenden Lagerung mittels der Schwenklagerungen, die mit den Schwenkachsen 12, 13, 14 und weiteren Elementen, die in Verbindung mit Fig. 3a und 3b beschrieben werden, nach vorne oder nach hinten geschwenkt werden. Diese Schwenkbewegung findet automatisch dann statt, wenn das restliche Fahrzeug eine entgegengesetzte Schwenkbewegung aufgrund einer Fahrbahnunebenheit durchführt.

Beispielsweise würde gemäß Fig. 2a ein Fahrzeug mit den Vorderrädern über eine Kuppe fahren, sodass das Fahrzeug sich im vorderen Bereich nach oben neigt. Gleichzeitig wird der Fahrzeugsitz aufgrund der schwenkbaren Aufhängung eine Rotationsbewegung seines Unterteils 11 gegenüber dem Fahrzeugsitzoberteil durchführen, sodass das Fahrzeugsitzoberteil nahezu horizontal in seiner Position verbleibt. Dies wird durch den nach vorne geneigten Kopf 19 eines Fahrzeugsitzbenutzers und die nach vorne verschwenkte Verbindungslinie 17 zwischen dem Kopf 19, einem Schwenkpunkt 16, um den die Schwenkbewegung stattfindet, wobei dieser Schwenkpunkt bzw. diese Schwenkachse fiktiv sein kann, und einem SIP-Punkt (Sitz-Index-Punkt) 18, dargestellt.

In Fig. 2a wird die Auslenkung des Fahrzeugsitzes nach vorne und in Fig. 2c die Auslenkung des Fahrzeugsitzes nach hinten dargestellt. Eine Schwenkung des Fahrzeugsitzes findet um die Schwenkachse 16, die als virtuelle Achse zu betrachten ist, statt.

Ein Kopf 19 ist über eine gemeinsame Linie 17 mit der Schwenkachse 16 und dem SIP-Punkt 18 verbunden und verdeutlicht, dass eine Abweichung der Stellung der Person, die sich auf der Sitzfläche 4a befindet, in ihrem Winkel von einer Vertikalen 20 vorliegt. Diese Abweichung besteht dann, wenn das Fahrzeug sich bei Durchfahren einer Mulde im vorderen Bereich nach unten neigt oder beim Überfahren einer Kuppe im vorderen Bereich nach oben neigt und hierdurch der Fahrzeugsitz gegenüber dem restlichen Fahrzeug entweder nach hinten gemäß Fig. 2c oder nach vorne gemäß Fig. 2a schwenkt.

In Fig. 3a und 3b sind technische Details des Fahrzeugsitzes gemäß der ersten Ausführungsform der Erfindung, der in einer Seitendarstellung zusammen mit einer Ausschnittsdarstellung gemäß Fig. 3b wiedergegeben ist, dargestellt.

Wie diesen Darstellungen gemäß Fig. 3a und 3b zu entnehmen ist, weisen die Schwenklagerungen, die vorder- und rückseitig in dargestellter trapezförmiger Form ausgerichtet angeordnet sind und sowohl linksseitig als auch rechtsseitig an dem Sitz befestigt sind, erste Schwenkachsen 12 und 13 und zweite Schwenkachsen 23, 14 auf.

Die erste Schwenklagerung im vorderen Bereich mit den Schwenkachsen 12 und 23 weist einen Hebelarm 21 auf, der die beiden Schwenkachsen 12 und 23 miteinander verbindet. Die Schwenkachse 12 ist in einem aufgrund der Querschnittsdarstellung nicht näher dargestellten Abschnitt des Unterteils 11 des Fahrzeugsitzes schwenkbar gelagert und mit einem Seitenbauteil des zwischen den Seitenrahmen des Unterteiles 11 angeordneten Sitzoberteiles befestigt. Dies trifft ebenso auf die zweite Schwenklagerung mit den Schwenkachsen 13, 14 und dem Hebelarm 23 zu. Auf diese Weise ist nahezu der gesamte Sitz in dem Sitzunterteil wippend gelagert, insbesondere auch aufgrund der Tatsache, dass die Hebelarme 21 und 22 nach unten betrachtet zueinander hingewandt ausgerichtet sind. Somit findet ständig ein Zurückpendeln des Fahrzeugsitzes innerhalb des Unterteiles 11 statt.

Zusätzlich ist eine Dämpfereinrichtung 24 an der zweiten Schwenklagerung angeordnet, wobei die zweite Schwenklagerung den Hebelarm 22 in gebogener Form aufweist.

Die Dämpfereinrichtung 24 ist vorteilhaft schwenkbar in einem Punkt 25 gelagert und ermöglicht das Abdämpfen der Schwingungsbewegungen des Fahrzeugsitzes im Ausgleich zu den Nickbewegungen des Fahrzeuges. Hierfür ist die Dämpfereinrichtung 24 mit einem Kolben 26 an dem gebogenen Hebelarm 22 befestigt.

Die Hebelarme 21 und 22 weisen vorzugsweise an ihren ersten und zweiten Enden 21 a, 21 b, 22a und 22b die ersten und zweiten Schwenkachsen auf. Jedoch ist auch denkbar, dass die Schwenkachsen mehr von den Enden 21 a, 21 b, 22a und 22b der Hebelarme 21 1 und 22 beabstandet sind.

Durch die Anordnung der Schwenkachse 14 innerhalb einer hier nicht näher dargestellten Kurvenbahn, die in dem Fahrzeugsitzunterteil 11 angeordnet ist und beispielsweise mit dem Bezugszeichen 15 der Fig. 1 entnehmbar ist, wird die Wippbewegung des Fahrzeugsitzes als Ausgleich zu der Nickbewegung des Fahrzeuges auf einer vorgegebenen Kurve bzw. Bogenform durchgeführt. Dies ermöglicht ein gezieltes Steuern der Schwenkbewegung und somit auch ein Beeinflussen eines fiktiven Schwenkpunktes bzw. einer fiktiven Schwenkachse, um welche der Fahrzeugsitz verschwenkt wird.

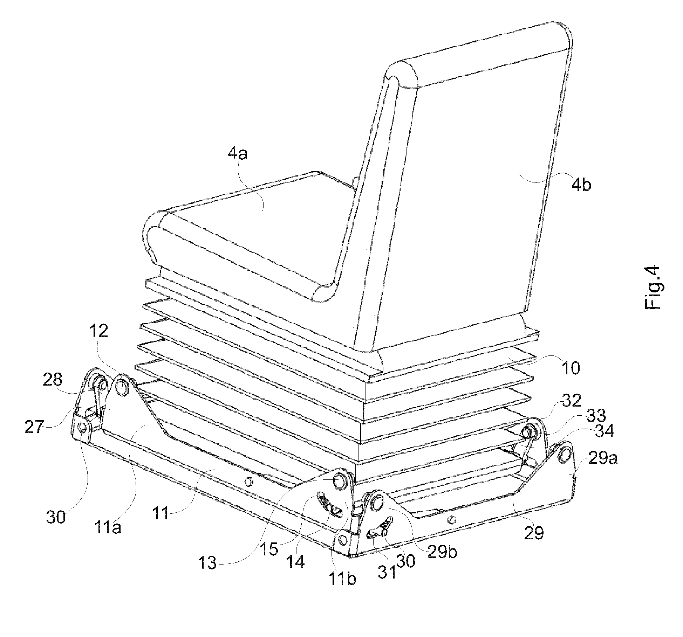

In Fig. 4 ist in einer perspektivischen Darstellung der Fahrzeugsitz gemäß einer zweiten Ausführungsform der Erfindung gezeigt. Gleiche und gleichbedeutende Bauteile werden mit gleichen Bezugszeichen versehen.

Dieser Darstellung ist zu entnehmen, dass der Fahrzeugsitz sich von dem Fahrzeugsitz gemäß der ersten Ausführungsform darin unterscheidet, dass er zusätzlich zu den seitlichen in längshorizontaler Richtung wirkenden Schwenklagerungen 12, 13, die an den Enden 11a und 11 b des Sitzunterteiles 11 angebracht sind, zusätzliche Schwenklagerungen an vorderseitigen- und rückseitigen Wandungen 27, 29 des Unterteils angebracht sind, die in Fahrzeugbreitenrichtung, also in Fahrzeugsitzbreitenrichtung, wirken. Dies ermöglicht, dass auch Kippbewegungen des Fahrzeuges in Seitenrichtung durch einen derartigen Fahrzeugsitz ausgeglichen werden können.

Die weiteren Schwenklagerungen sind ebenso mit Hebeln 28 und Schwenkachsen 30 und 30a ausgestattet und sind im rückwärtigen Bereich an Enden 29b und 29a der rückwärtigen Wandung 29 des Unterteiles angeordnet.

Zusätzliche Schwenklagerungen, die in Horizontalrichtung wirken, sind mit einer Schwenkachse 33 und einem Hebelarm 34, welche ebenso an einem nach oben ausgerichteten Vorsprung 32 des Unterteiles 11 angeordnet sind, dargestellt.

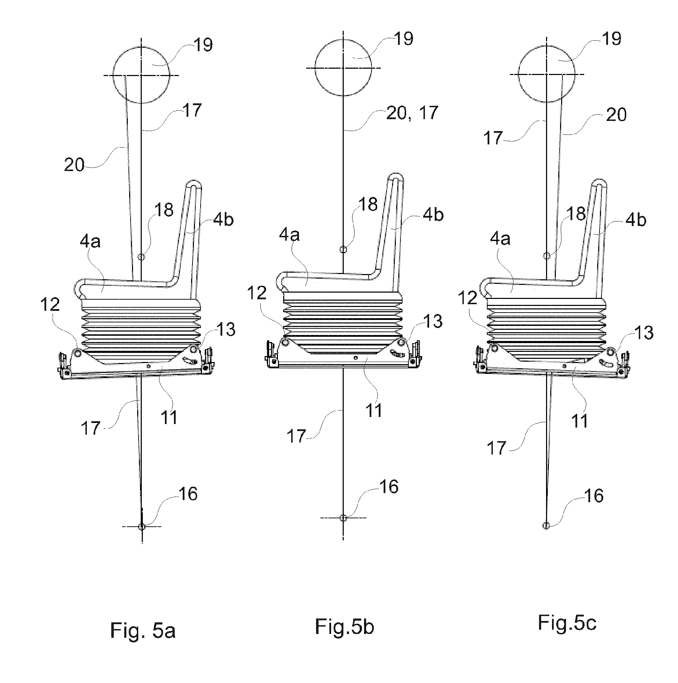

In Fig. 5a, 5b und 5c ist wiederum in einer Seitendarstellung der Fahrzeugsitz gemäß der zweiten Ausführungsform der Erfindung in verschiedenen Schwenkpositionen, die in Längsrichtung des Fahrzeuges und des Fahrzeugsitzes wirken, dargestellt.

Diesen Darstellungen ist zu entnehmen, dass die Linie 17, welche eine Z-Achse des Fahrzeugsitzes wiedergibt und einen Kopf 19 mit einem SIP-Punkt 18 (Schwerpunkt) und einer Schwenkachse 16 verbindet, eine andere Ausrichtung in den Fig. 5a und 5c aufweist, als die Linie 20, welche eine Z-Achse des Fahrzeuges wiedergibt. So ist in Fig. 5a diejenige Schwenkbewegung des Fahrzeugsitzes gegenüber dem Fahrzeug wiedergegeben, wenn das Fahrzeug mit seiner Vorderachse in eine Senke fährt und hierdurch eine Schwenkbewegung nach vorne durchführt. Der Fahrzeugsitz 4 hingegen verbleibt mit seiner Sitzfläche 4a in der Horizontalen, sodass eine Abweichung zwischen den Linien 17 und 20 stattfindet.

In Fig. 5c hingegen findet ein Überfahren eines Buckels mit der Vorderachse des Fahrzeuges statt. Gleichzeitig bleibt der Fahrzeugsitz in der Sitzfläche 4a in der Horizontalen, wohingegen das Fahrzeugsitzunterteil 11 durch das Überfahren des Buckels eine Schwenkbewegung nach hinten erfährt. Dies wird ebenso durch einen Vergleich der beiden Linien 17 und 20 verdeutlicht.

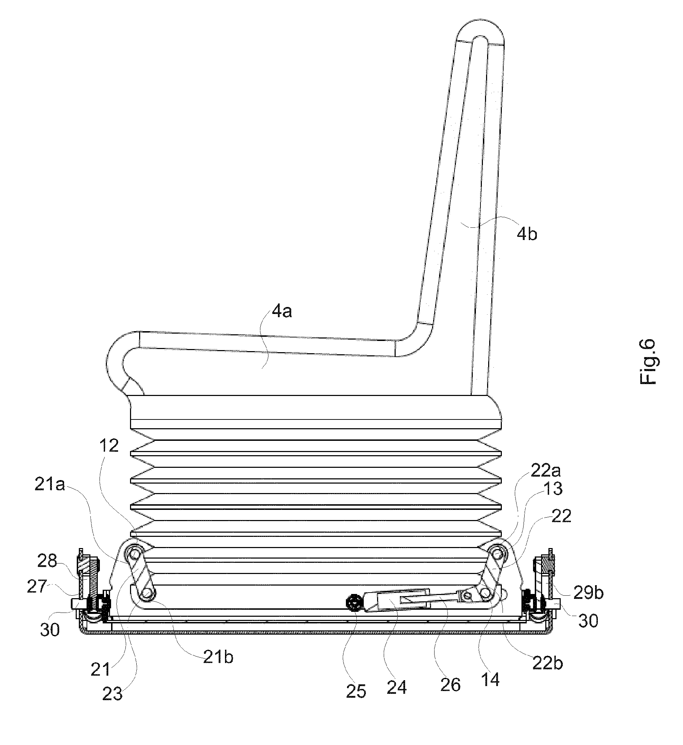

In Fig. 6 sind technische Details in einer teilweise dargestellten Querschnittsdarstellung zusammen mit einer Seitendarstellung des Fahrzeugsitzes wiedergegeben. Dieser Darstellung ist zu entnehmen, dass eine zweite Schwenkachse 30a, die zu der Schwenklagerung für eine Schwenkbewegung, welche in Fahrzeugbreitenrichtung bzw. Fahrzeugsitzbreitenrichtung wirkt, ebenso innerhalb einer bogenförmigen Kurvenbahn angeordnet ist. Dies trifft auch auf die zweite Schwenkachse 30 im vorderen Bereich des Fahrzeugsitzes zu. Ansonsten sind gleiche und gleichbedeutende Bauteile mit gleichen Bezugszeichen zu dem Fahrzeugsitz gemäß der ersten Ausführungsform dargestellt.

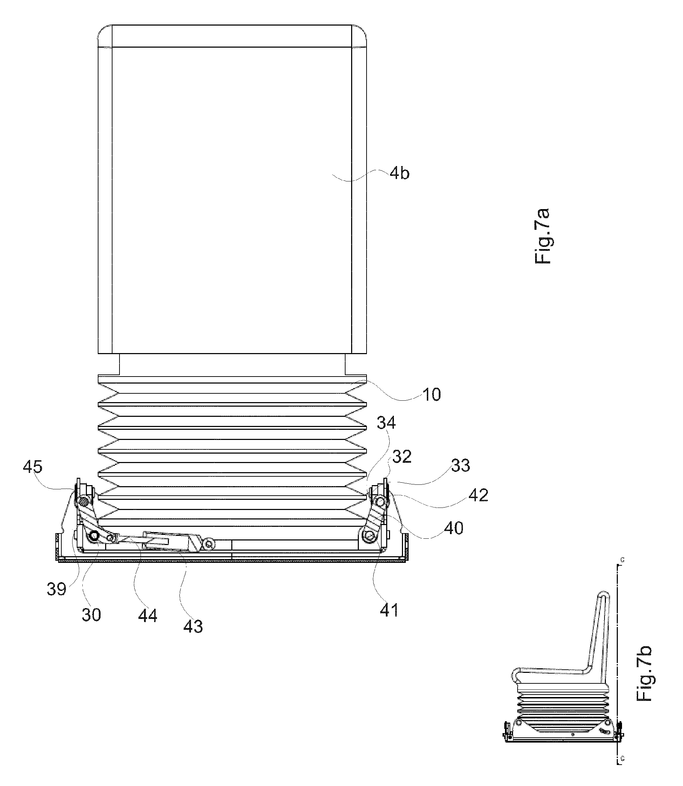

In Fig. 7a ist der Fahrzeugsitz gemäß der zweiten Ausführungsform der Erfindung in einer teilweisen Querschnittsdarstellung, insbesondere im unteren Bereich, wiedergegeben, wie es durch eine Querschnittsdarstellung gemäß Linie C.-C. gem. Fig. 7b verdeutlicht wird.

Der Darstellung gem. Fig. 7a ist zu entnehmen, dass im rückwärtigen Bereich des Fahrzeugsitzes ebenso Hebelarme 39 und 40 in ähnlicher Weise vorhanden sind, wie bei den Schwenklagerungen, welche in längshorizontaler Richtung wirken. Bei diesen dargestellten Schwenklagerungen, welche in Seitenrichtung wirken bzw. Fahrzeugbreitenrichtung wirken, sind bekannterweise die beiden Hebel 39 und 40 angeordnet, die mittels Schwenkachsen 45, 30 und 42, 41 an dem Unterteil und an Bauteilen des Fahrzeugsitzoberteiles angeordnet sind. Ebenso ist eine Dämpfereinrichtung 43 mit einem Kolben 44 dargestellt, wobei der Kolben 44 mit dem bereits beschriebenen gekrümmten Hebelarm 39, der um die Schwenkachse 30 schwenkbar ist, verbunden ist.

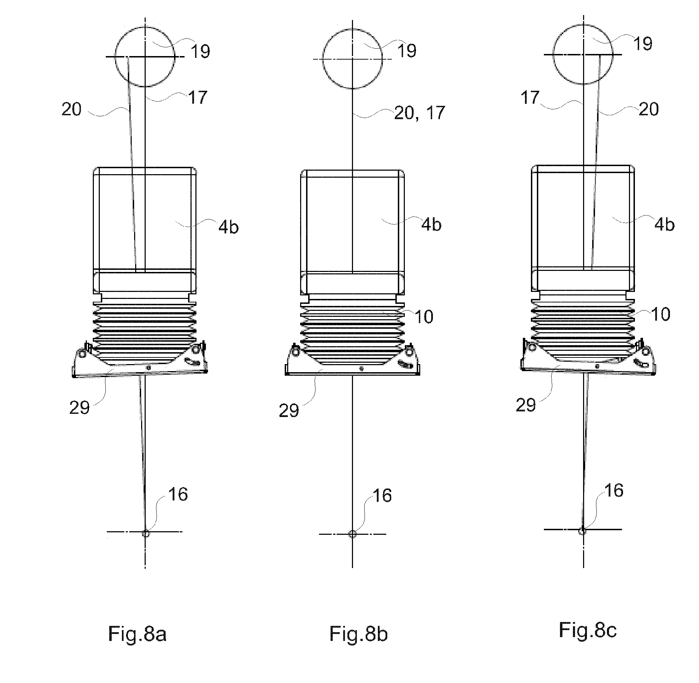

In den Fig. 8a, 8b und 8c ist der Fahrzeugsitz gemäß der zweiten Ausführungsform der Erfindung in verschiedenen Schwenkpositionen, welche in Fahrzeugbreitenrichtung wirken, dargestellt. Diesen Darstellungen ist wieder zu entnehmen, dass die Fahrzeugsitzachse bzw. Fahrersitzachse 17 bei einer seitlichen Fahrzeugauslenkung nach links eine Abweichung gegenüber der Fahrzeugachse 20 aufweist. Ebenso ist in Fig. 8c dargestellt, dass in entgegengesetzter Richtung die Fahrzeugsitzachse 17 gegenüber der Fahrzeugachse 20 um einen Winkel nach links ausgerichtet ist, also die Fahrzeugachse 20 sich aufgrund einer Bewegung des Fahrzeuges nach rechts auch nach rechts geneigt ist.

Sämtliche Hebelarme können auch beispielsweise durch Riemen oder dergleichen Teile ersetzt werden.

### Bezugszeichenliste

- 3: Fahrzeugkabine
- 4: Fahrzeugsitz

- 4a: Sitzoberfläche
- 4b: Rückenlehne
- 8: Fahrzeuglängsrichtung
- 9: Doppelpfeil
- 10: Faltenbalg
- 11: Fahrzeugsitzunterteil
- 12: Schwenkachse
- 13: Schwenklagerung
- 14: Schwenklagerung
- 15: Kurvenbahn
- 16: Schwenkpunkt
- 17: Verbindungslinie
- 18: SIP-Punkt
- 19: Kopf
- 20: Vertikale
- 21: Hebelarm
- 21a: Ende
- 21b: Ende
- 22: Hebelarm
- 22a: Ende
- 22b: Ende
- 23: Schwenkachse
- 24: Dämpfereinrichtung
- 25: Punkt
- 26: Kolben
- 27: Wandung
- 28: Hebel
- 29: Wandung
- 29a: Ende
- 29b: Ende
- 30: Schwenkachse
- 30a: Schwenkachse
- 31: Kurvenbahn
- 32: Vorsprung
- 33: Schwenkachse
- 34: Hebelarm
- 36: Schwenkachse
- 39: Hebel
- 40: Hebel
- 41: Schwenklagerung
- 42: Schwenklagerung
- 43: Dämpfereinrichtung
- 44: Dämpfereinrichtung
- 45: Schwenklagerung
- 50: Kurvenbahn

## Patentansprüche

1. Fahrzeugschwingungsvorrichtung für einen Fahrzeugsitz (4, 4a, 4b) oder eine Fahrzeugkabine (3) mit einem Unterteil (11, 29) und einem gegenüber dem Unterteil (11, 29) mittels mindestens einer Dämpfereinrichtung (24 - 26, 43, 44), federngelagertem Oberteil (4a, 4b),
wobei das Oberteil (4a, 4b) an dem Unterteil (11, 29) hängend gelagert ist, sodass das Oberteil (4a, 4b) bei Auftreten von Schwingungen zwischen dem Oberteil (4a, 4b) und dem Unterteil (11, 29) um eine fiktive oder reelle, unterhalb des Oberteils (4a, 4b) angeordnete, sich in Fahrzeugbreitenrichtung oder Fahrzeuglängsrichtung (8) erstreckende Achse (16) schwenkbar ist und
wobei ein mittels einer zweiten Schwenkachse (23, 14; 36, 41) am Oberteil (4a, 4b) angebrachtes zweites Ende (21 b, 22b) jeweils mindestens eines Hebelarms (21, 22; 39, 40) einer ersten und einer zweiten Schwenklagerung (12, 21, 23; 13, 14, 22; 30, 39, 45; 40, 41, 42), mittels der das Unterteil (11, 29) und das Oberteil (4a, 4b) miteinander verbunden sind, unterhalb eines mittels einer ersten Schwenkachse (42, 45; 12, 13) am Unterteil (11, 29) angebrachten ersten Endes (21 a, 22a) liegt und die Hebelarme (21, 22; 39, 40) nach unten betrachtet zueinander hingewandt ausgerichtet sind,
**dadurch gekennzeichnet, dass**
die zweite Schwenkachse (14, 30) der zweiten Schwenklagerung innerhalb einer am Unterteil (11, 29) angebrachten Kurvenbahn (15, 31) verschiebbar ist.

2. Fahrzeugschwingungsvorrichtung nach Anspruch 1,
**dadurch gekennzeichnet, dass**
jeweils eine erste Schwenklagerung an im Fahrzeugvorderbereich des Oberteils (4a, 4b) sich nach oben erstreckenden Seitenwandungen des Unterteils (11) einerseits und an zwischen den fahrzeuglinks- und fahrzeugrechtsseitigen Seitenwandungen (11) angeordneten Seitenbauteilen des Oberteils (4a, 4b) andererseits angeordnet ist.

3. Fahrzeugschwingungsvorrichtung nach einem der Ansprüche 1 oder 2,
**dadurch gekennzeichnet, dass**
jeweils eine zweite Schwenklagerung an im Fahrzeug hinteren Bereich des Oberteils (4a, 4b) sich nach oben erstreckenden Seitenwandungen des Unterteils (11) einerseits und an zwischen den fahrzeuglinks- und fahrzeugrechtsseitigen Seitenwandungen (11) angeordneten Seitenbauteilen des Oberteils (4a, 4b) angeordnet ist.

4. Fahrzeugschwingungsvorrichtung nach einem der Ansprüche 1 bis 3,
**dadurch gekennzeichnet, dass**
die ersten und zweiten Schwenklagerungen an fahrzeugvorderseitigen und fahrzeugrückseitigen Vorderseite- und Rückseite-Wandungen des Unterteils (28, 29) und an vorderseitigen und rückseitigen Bauteilen des Oberteils (4a, 4b) zur Durchführung einer Schwenkbewegung in Fahrzeugbreitenrichtung angeordnet sind.

5. Fahrzeugschwingungsvorrichtung nach einem der Ansprüche 1 bis 4,
**dadurch gekennzeichnet, dass**
die Schwenkbewegung des schwenkbaren Oberteils (4a, 4b) mittels einer Dämpfereinrichtung (24 - 26; 43, 44) mit einer der Schwenkbewegung entgegenwirkenden Dämpfungskraft zur Schwingungsdämpfung beaufschlagbar ist, wobei die Dämpfereinrichtung (24 - 26; 43, 44) mit mindestens einem der Hebelarme (21, 22; 39, 40) einerseits und dem Unterteil (11, 29) andererseits verbunden ist.

6. Fahrzeugschwingungsvorrichtung nach einem der vorangegangenen Ansprüche,
**dadurch gekennzeichnet, dass**
das Oberteil ein Fahrzeugsitzoberteil (4a, 4b) und das Unterteil ein mit einem Fahrzeugkarosserieteil oder-rahmen und/oder mit einem Fahrzeugkabinenteil (3, 6) verbundenes Fahrzeugsitzunterteil (11, 29) sind.

7. Fahrzeugschwingungsvorrichtung nach einem der Ansprüche 1 bis 5,
**dadurch gekennzeichnet, dass**
das Oberteil eine Fahrzeugkabine (3) und das Unterteil ein Fahrzeugrahmenteil sind.

## Claims

1. Vehicle oscillation device for a vehicle seat (4, 4a, 4b) or a vehicle cab (3), comprising a lower part (11, 29) and an upper part (4a, 4b) which is spring mounted relative to the lower part (11, 29) by means of at least one damper apparatus (24-26, 43, 44), the upper part (4a, 4b) being suspended on the lower part (11, 29) so that, when oscillations occur between the upper part (4a, 4b) and lower part (11, 29), the upper part (4a, 4b) can swivel about an imaginary or real axis (16) which is arranged below the upper part (4a, 4b) and extends in the width direction or longitudinal direction (8) of the vehicle, and a second end (21 b, 22b) of at least one lever arm (21, 22; 39, 40) of a first and a second swivel bearing (12, 21, 23; 13, 14, 22; 30, 39, 45; 40, 41, 42), by means of which the lower part (11, 29) and the upper part (4a, 4b) are interconnected, which end is attached to the upper part (4a, 4b) by means of a second swivel axis (23, 14; 36, 41), being located below a first end (21 a, 22a) which is attached to the lower part (11, 29) by means of a first swivel axis (42, 45; 12, 13), and the lever arms (21, 22; 39, 40) being oriented pointing towards one another when viewed downwardly, **characterised in that** the second swivel axis (14, 30) of the second swivel bearing can be moved within a curved track (15, 31) which is attached to the lower part (11, 29).

2. Vehicle oscillation device according to claim 1, **characterised in that** in each case a first swivel bearing is arranged both on side walls of the lower part (11) which extend upwards in the vehicle front region of the upper part (4a, 4b) and on side components of the upper part (4a, 4b) which are arranged between the side walls (11) on the left- and right-hand sides of the vehicle.

3. Vehicle oscillation device according to either claim 1 or claim 2, **characterised in that** in each case a second swivel bearing is arranged both on side walls of the lower part (11) which extend upwards in the vehicle rear region of the upper part (4a, 4b) and on side components of the upper part (4a, 4b) which are arranged between the side walls (11) on the left- and right-hand sides of the vehicle.

4. Vehicle oscillation device according to any of claims 1 to 3, **characterised in that** the first and second swivel bearings are arranged on front and rear walls of the lower part (28, 29) at the vehicle rear and front, and on front and rear components of the upper part (4a, 4b), in order to carry out a swivelling movement in the width direction of the vehicle.

5. Vehicle oscillation device according to any of claims 1 to 4, **characterised in that** the swivelling movement of the swivelling upper part (4a, 4b) can be subjected, by means of a damper apparatus (24-26; 43, 44), to a damping force opposing the swivelling movement in order to damp the oscillation, the damper apparatus (24-26; 43, 44) being connected at one end to at least one of the lever arms (21, 22; 39, 40) and at the other end to the lower part (11, 29).

6. Vehicle oscillation device according to any of the preceding claims, **characterised in that** the upper part is a vehicle seat upper part (4a, 4b) and the lower part is a vehicle seat lower part (11, 29) which is connected to a vehicle body part or frame and/or to a vehicle cab part (3, 6).

7. Vehicle oscillation device according to any of claims 1 to 5, **characterised in that** the upper part is a vehicle cab (3) and the lower part is a vehicle frame part.

## Revendications

1. Dispositif pour des vibrations de véhicule destiné à un siège de véhicule (4, 4a, 4b) ou une cabine de véhicule (3) comportant une partie inférieure (11, 29) et une partie supérieure (4a, 4b) disposée de manière amortie par rapport à la partie inférieure (11, 29) à l'aide d'au moins un dispositif d'amortissement (24-36, 43, 44),
la partie supérieure (4a, 4b) étant suspendue sur la partie inférieure (11, 29), de façon à ce que la partie supérieure (4a, 4b) soit pivotante, lors de l'apparition de vibrations entre la partie supérieure (4a, 4b) et la partie inférieure (11, 29), autour d'un axe (16), fictif ou réel, situé en dessous de la partie supérieure (4a, 4b), s'étendant dans le sens de la largeur du véhicule ou dans le sens de la longueur du véhicule (8) et
une deuxième extrémité (21 b, 22b), montée sur la partie supérieure (4a, 4b) à l'aide d'un deuxième axe de pivotement (23, 14 ; 36, 41), d'au moins un bras de levier (21, 22 ; 39, 40) d'un premier et d'un deuxième logement pivotant (12, 21, 23 ; 13, 14, 22 ; 30, 39, 45 ; 40, 41, 42), à l'aide desquels la partie inférieure (11, 29) et la partie supérieure (4a, 4b) sont reliées entre elles, se trouvant en dessous d'une première extrémité (21 a, 22a) montée sur la partie inférieure (11, 29) à l'aide d'un premier axe de pivotement (42, 45 ; 12, 13) et les bras de levier (21, 22 ; 39, 40) étant orientés l'un vers l'autre en vue du dessus.
**caractérisé en ce que**
le deuxième axe de pivotement (14, 30) du deuxième logement de pivotement est coulissant à l'intérieur d'une piste courbe (15, 31) disposée sur la partie inférieure (11, 29).

2. Dispositif pour des vibrations de véhicule selon la revendication 1,
**caractérisé en ce qu'**à chaque fois le premier logement de pivotement se trouve, d'une part, sur les parois latérales, situées au niveau de la partie avant de la partie supérieure du véhicule et s'étendant vers le haut, de la partie inférieure (11) et, d'autre part, sur les composants latéraux de la partie supérieure (4a, 4b) situés entre les parois latérales (11) côté gauche et côté droit du véhicule.

3. Dispositif pour des vibrations de véhicule selon l'une des revendications 1 ou 2,
**caractérisé en ce qu'**à chaque fois un deuxième logement de pivotement se trouve, d'une part, sur les parois latérales de la partie inférieure (11), qui s'étendent vers le haut dans la partie arrière de la partie supérieure (4a, 4b) du véhicule, et sur les composants latéraux de la partie supérieure (4a, 4b) situés entre les parois latérales (11) côté gauche et côté droit du véhicule.

4. Dispositif pour des vibrations de véhicule selon l'une des revendications 1 à 3,
**caractérisé en ce que** les premier et deuxième logements de pivotement se trouvent sur les parois avant et arrière, côté avant et côté arrière du véhicule, de la partie inférieure (28, 29) et sur des composants avant et arrière de la partie supérieure (4a, 4b) pour la réalisation d'un mouvement de pivotement dans le sens de la largeur du véhicule.

5. Dispositif pour des vibrations de véhicule selon l'une des revendications 1 à 4,
**caractérisé en ce que** le mouvement de pivotement de la partie supérieure (4a, 4b) pivotante peut être réalisé à l'aide d'un dispositif d'amortissement (24-26 ; 43, 44) avec une force d'amortissement compensant le mouvement de pivotement afin d'amortir les vibrations, le dispositif d'amortissement (24-26 ; 43, 44) étant relié avec au moins un des bras de levier (21, 22 ; 39, 40), d'une part, et la partie inférieure (11, 29), d'autre part.

6. Dispositif pour des vibrations de véhicule selon l'une des revendications précédentes,
**caractérisé en ce que** la partie supérieure est une partie supérieure de siège de véhicule (4a, 4b) et la partie inférieure est une partie inférieure de siège de véhicule (11, 29) relié à une partie de carrosserie ou de châssis de véhicule et/ou à une partie de cabine de véhicule (3, 6).

7. Dispositif pour des vibrations de véhicule selon l'une des revendications 1 à 5,
**caractérisé en ce que** la partie supérieure est une cabine de véhicule (3) et la partie inférieure est une partie de châssis de véhicule.
